## Europäisches Patentamt

## European Patent Office

## Office européen des brevets

(19)

(11) Veröffentlichungsnummer: **0 058 939**
**A1**

(12) # EUROPÄISCHE PATENTANMELDUNG

(21) Anmeldenummer: **82101207.7**

(22) Anmeldetag: **18.02.82**

(51) Int. Cl.³: **C 08 L 71/04, C 08 L 25/00**

(30) Priorität: **24.02.81 DE 3106746**

(43) Veröffentlichungstag der Anmeldung: **01.09.82**
**Patentblatt 82/35**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Brandstetter, Franz, Dr., Ritterbuechel 45,**
**D-6730 Neustadt (DE)**
Erfinder: **Haaf, Franz, Dr., Leistadter Strasse 9,**
**D-6702 Bad Duerkheim (DE)**
Erfinder: **Naarmann, Herbert, Dr., Haardtblick 15,**
**D-6719 Wattenheim (DE)**
Erfinder: **Schuster, Hans H., Dr., Luitpoldstrasse 166,**
**D-6700 Ludwigshafen (DE)**

(54) **Verfahren zum Herstellen thermoplastischer Formmassen.**

(57) Die Erfindung bezieht sich auf ein Verfahren zum Herstellen thermoplastischer Formmassen, die (A) ein thermoplastisches Styrolpolymerisat sowie (B) einen Polyphenylenether enthalten, durch Schmelzen der Komponenten (A) und (B) und Erzeugen einer homogenen Masse aus den Komponenten bei Temperaturen oberhalb der Erweichungstemperatur des Polyphenylenethers (B). Charakteristisch für das erfindungsgemässe Verfahren ist, dass zum Erzeugen der homogenen Masse beim Schmelzen ein feuchter Polyphenylenether (B) eingesetzt wird, wobei der Feuchtigkeitsgehalt 2 bis 70 Gewichtsprozent, bezogen auf das Trockengewicht des Polyphenylenethers (B), beträgt, und die befeuchtende Flüssigkeit zu mindestens 50 Gewichtsprozent aus Wasser sowie — im gegebenen Fall — in der Restmenge aus organischer, der Gewinnung des Polyphenylenethers (B) entstammenden Flüssigkeit besteht. Die Formmassen lassen sich so nicht nur in technisch besonders einfacher Weise erhalten, sondern sie zeichnen sich auch durch verbesserte organoleptische Eigenschaften aus.

## Verfahren zum Herstellen thermoplastischer Formmassen

Die vorliegende Erfindung betrifft ein Verfahren zum Herstellen thermoplastischer Formmassen, die

(A)  100 Gewichtsteile eines thermoplastischen Styrolpolymerisats sowie

(B)  5 bis 950, insbesondere 20 bis 500 Gewichtsteile eines Polyphenylenethers enthalten,

durch Schmelzen der Komponenten A und B und Erzeugen einer homogenen Masse aus den Komponenten bei Temperaturen oberhalb der Erweichungstemperatur des Polyphenylenethers (B).

Thermoplastische Massen, die sich zur Herstellung von Formteilen eignen und die schlagzäh modifizierte Styrolpolymerisate und Polyphenylenether enthalten, sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß die Massen einen mehr oder weniger unangenehmen Geruch besitzen, vor allem bei oder aber auch nach der Verarbeitung.

Die thermoplastischen Formmassen werden unter anderem durch Mischen von Polyphenylenetherpulver oder -granulat mit schlagfest modifiziertem Polystyrol bei relativ hohen Temperaturen, z.B. bei 300 bis 320°C, erhalten. Hierzu ist es nötig, daß der Polyphenylenether zunächst aus der Reaktionslösung isoliert wird. Dies geschieht meist durch

vG/P

0053939

Ausfällen mit einem Nichtlöser, wie Methanol, oder durch Einsprühen der Reaktionslösung in ein großes Volumen heißes Wasser, wie es beispielsweise in der US-PS 4 154 719 in Beispiel I oder in der DE-OS 23 59 948 beschrieben ist. Nach dem Abtrennen des Polymerisats muß dann immer noch ein aufwendiger und kostspieliger Trocknungsprozess in Kauf genommen werden, bevor man durch Aufschmelzen des jetzt getrockneten Polyphenylenethers und des Styrol enthaltenden Polymerisats die Mischungen herstellen kann.

Der Erfindung lag also die Aufgabe zugrunde, ein technisch einfaches Verfahren zum Einarbeiten von Polyphenylenethern in Styrol enthaltende Polymerisate zu finden, bei dem der aufwendige Trocknungsschritt des Polyphenylether umgangen werden kann, und das zu Formmassen führt, die während und nach der Verarbeitung verbesserte organoleptische Eigenschaften besitzen.

Diese Aufgabe wird erfindungsgemäß dadurch gelöst, daß zum Erzeugen der homogenen Masse beim Schmelzen ein feuchter Polyphenylenether (B) eingesetzt wird, wobei der Feuchtigkeitsgehalt 2 bis 70, insbesondere 5 bis 35 Gewichtsprozent, bezogen auf das Trockengewicht des Polyphenylenethers (B), beträgt, und die befeuchtende Flüssigkeit zu mindestens 50, insbesondere zu mindestens 80 Gewichtsprozent aus Wasser sowie - im gegebenen Fall - in der Restmenge aus organischer, der Gewinnung des Polyphenylenethers (B) entstammender Flüssigkeit besteht.

Gegenstand der vorliegenden Erfindung ist dementsprechend ein Verfahren zum Herstellen thermoplastischer Formmassen, die

(A) 100 Gewichtsteile eines thermoplastischen - vorzugsweise schlagfest modifizierten - Styrolpolymerisats sowie

(B) 5 bis 950, insbesondere 20 bis 500 Gewichtsteile eines Polyphenylenethers enthalten,

durch Schmelzen der Komponenten (A) und (B) und Erzeugen einer homogenen Masse aus den Komponenten bei Temperaturen oberhalb der Erweichungstemperaturen des Polyphenylenethers (B). Das erfindungsgemäße Verfahren ist dadurch gekennzeichnet, daß zum Erzeugen der homogenen Masse beim Schmelzen ein feuchtes Polyphenylenether (B) eingesetzt wird, wobei der Feuchtigkeitsgehalt 2 bis 70, insbesondere 5 bis 35 Gewichtsprozent, bezogen auf das Trockengewicht des Polyphenylenthers (B) beträgt, und die befeuchtende Flüssigkeit zu mindestens 50, insbesondere zu mindestens 80 Gewichtsprozent aus Wasser sowie - im gegebenen Fall - in der Restmenge aus organischer, der Gewinnung des Polyphenylenthers (B) entstehende Flüssigkeit besteht.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können schlagfest modifizierte Styrolpolymerisate und Polyphenylenether in beliebigen Mengen, beispielsweise in Mengen von 5 bis 90 Gew.-% Styrolpolymerisat und 95 bis 10 Gew.-% Polyphenylenether enthalten. Für die Herstellung von Formteilen eignen

0058939

sich insbesondere solche Formmassen, die 20 bis 80 Gew.-% schlagfest modifizierte Styrolpolymerisate und 80 bis 20 Gew.-% Polyphenylenether enthalten.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoff, die kein $\alpha$-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether, Bevorzugterweise wird der Poly(2,6-dimethyl-1,4-phenylen)ether eingesetzt.

Die Polyphenylenether können z.B. in Gegenwart von komplexbildenden Mitteln wie Kupferbromid und Dibutylamin aus den Phenolen hergestellt werden. Bevorzugt werden solche Polyphenylenether, die eine Grenzviskosität zwischen 0,45 und 0,65 dl/g (gemessen in Chloroform bei 30°C) besitzen.

Bei den Styrol enthaltenden Polymerisaten handelt es sich um Polymerisate von Styrol und/oder $\alpha$-Methylstyrol und deren Polymerisate mit Acrylnitril, mit Maleinsäureanhydrid und mit Estern der Methacrylsäure, wobei der Gehalt an Comonomeren 10 Gew.-%, bezogen auf das jeweilige Styrol und bzw. $\alpha$-Methylstyrol enthaltene Copolymerisat nicht übersteigen soll.

Diese Polymerisate bzw. Copolymerisate können nach herkömmlichen Verfahren erhalten werden. So kann die Polymerisation des Styrols und/oder des $\alpha$-Methylstyrols bzw. deren Copolymerisation der oben erwähnten Comonomeren in Masse, Lösung, Suspension oder wäßriger Emulsion durchgeführt werden.

Bevorzugterweise wird als Styrol enthaltendes Polymerisat aber schlagfest modifiziertes Polystyrol verwendet.

Bei den schlagfest modifizierten Polystyrolen handelt es sich um Produkte, wie sie z.B. von A. Echte in der Angew. Makromolekularen Chemie 58/59 (1977), Seiten 175 bis 198 beschrieben sind.

Die Herstellung der schlagfest modifizierten Polymerisate kann nach einem beliebigen bekannten Verfahren vorgenommen werden.

Die meist angewandten Verfahren zur Herstellung schlagzäh modifizierter Styrolpolymerisate sind die Polymerisation in Masse der Lösung, wie es beispielsweise in der US-PS 2 694 692 beschrieben ist und Verfahren zur Masse-Suspensionspolymerisation, wie sie beispielsweise in der US-PS 2 862 906 beschrieben sind.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Na-

0058939

turkautschuk z.B. Polybutadien, Polyisopren und Mischpolymerisate, des Butadiens und/oder Isoprens mit Styrol
und anderen Comonomeren, die eine Glastemperatur unter
$-20^{\circ}$C besitzen. Besonders eignen sich Butadien-Polymerisate mit einem 1,4-cis-Gehalt der zwischen 10 und 98 liegt.

Die Herstellung der schlagfest modifizierten Polymerisate mit dem erfindungsgemäßen Eigenschaftsbild geschieht
durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei
zunächst der Kautschuk in den polymerisierbaren Monomeren
gelöst und diese Ausgangslösung polymerisiert wird.

Bei der Lösungspolymerisation können dieser Ausgangslösung
noch bis zu maximal 50 Gewichtsprozent, bezogen auf die
eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen
Kohlenwasserstoffen geeignet. Bevorzugt werden dabei
Toluol, Äthylbenzol, die Xylole oder Gemische dieser
Verbindungen.

Bei der Polymerisation in wäßriger Dispersion wird im allgemeinen auf den Zusatz von Lösungsmitteln verzichtet;
eine besonders günstige Ausführungsform besteht darin, die
Lösung des Kautschuks in den Monomeren bis zu einem Umsatz von etwa 45 % in Masse unter Einwirkung von Scherkräften vorzupolymerisieren, diese Reaktionsmasse dann in
Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azo-di-

isobutyronitril u.ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z.B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d.h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906, auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar

0058939

nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung

0058939

besonders vor und während der Phaseninversion. Die Einzelmaßnahmen sind prozeßspezifisch und dem Fachmann bekannt (siehe z.B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein Weichkomponenten-Gehalt von 25 bis 35 Gew.-%, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 15 Gew.-%, vorzugsweise von 5 bis 12 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weniger starkem Maße während der Polymerisation durch die monovinylaromatischen Verbindungen gepfropft worden sind.

0058939

Nach dem erfindungsgemäßen Verfahren können auch Mischungen aus Polyphenylenethern und sogenannten Blockcopolymerisaten aus Butadien und Styrol bzw. aus Isopren und Styrol erhalten werden. Geeignete Blockcopolymerisate sind z.B. solche vom Typ AB oder ABA, wobei A einen Block aus Styrolpolymerisaten und B einen Block aus Butadien- oder Isoprenpolymerisaten darstellt. Hierbei können der Butadien- oder Isoprenanteil teilweise oder auch vollständig hydriert sein. Geeignet sind auch sogenannte Radialblockcopolymere, insbesondere solche radiale Blockcopolymere mit einer multimodalen Blockverteilung. Die Herstellung solcher Blockcopolymerisate ist z.B. in "Polymer Chemistry of Synthetic Elastomers", Interscience Publishers, Vol. 23, Teil II (1969), S. 553 bis 559 sowie in der DE-OS 19 59 922, 25 50 226 und 25 50 227 beschrieben.

Die Mischungen aus den schlagzäh modifizierten Styrolpolymerisaten und Polyphenylenethern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Das erfindungsgemäße Verfahren kann auf üblichen Vorrichtungen, die ein homogenes Mischen zulassen, wie Knetern und Extrudern, angewandt werden. Dabei werden die Styrol enthaltenden Polymerisate im allgemeinen als Schmelze in die Mischvorrichtung eingebracht.

Bei Verwendung eines Extruders als Mischvorrichtung wird vorzugsweise zunächst das feuchte Polyphenylenetherpolymerisat eindosiert. Dies kann ohne erhitzen oder Anwendung von Druck geschehen, und erst dann wird das Styrol enthaltende Polymerisat in Form einer Schmelze zugeführt.

0058939

Das feuchte Polyphenylenetherpolymerisat wird im allgemeinen durch Einbringen der Reaktionslösung in ein den Polyphenylenether nicht lösendes Medium, wie Methanol, Wasser, bzw. durch Einbringen des Nichtlösers in die Reaktionslösung gewonnen. Dies kann beispielsweise durch die Fällung mit Methanol erfolgen. Zur Entfernung von wasserlöslichen Verunreinigungen, die vor allem aus dem verwendeten Katalysatorsystem auf Amin-Kupfer- bzw. Mangan-Basis herrühren können, empfiehlt es sich, das gefällte Produkt gut mit Wasser zu waschen. Eine andere Möglichkeit, um den Polyphenylenether aus der Reaktionslösung zu gewinnen, besteht darin, daß man die Reaktionslösung in heißes Wasser einsprüht. Dabei verdampft ein Großteil der verwendeten organischen Lösungsmittel und zugleich wird der Polyphenylenether von wasserlöslichen Verunreinigungen befreit. Ein Teil des Wassers und des organische Restlösungsmittelanteil, im allgemeinen 10 bis 90 Gew.-%, vorzugsweise 30 bis 70 Gew.-%, bezogen auf den Anteil an Flüssigphase im gefällten oder verdüsten Produkt, wird nun mechanisch abgetrennt. Dies kann beispielsweise durch Filtrieren, Abpressen oder Zentrifugieren geschehen. Der zurückbleibende Polyphenylenether soll danach noch maximal 70 Gew.-%, vorzugsweise maximal 35 Gew.-% flüssige Anteile, wie Wasser und Restlösungsmittel enthalten.

Nach Vereinigung dieses Polyphenylenetherpolymerisats mit dem Styrol enthaltenden Polymerisats im Extruder werden die beiden Komponenten durch Mischaggregate, beispielsweise durch intensiv mischende Knetelemente im Extruder homogen vermischt. Dabei muß die Temperatur oberhalb des Erweichungspunktes des Polyphenylenethers liegen. Im allgemeinen liegt sie im Temperaturbereich zwischen 200 und 320°C, vorzugsweise bei 220 bis 270°C.

Übliche Zusatzstoffe, wie Pigmente, Farbstoffe, Füllstoffe, Gleitmittel, Antistatika, Antioxidativa, Flammschutzmittel, können entweder in trockener Form zugemischt werden, zweckmäßigerweise werden sie jedoch zusammen mit dem feuchten Polyphenylenetherpolymerisat ebenfalls in feuchter Form zugegeben.

Die im Polyphenylenether und gegebenenfalls auch im Styrol enthaltenden Polymerisat vorhandenen flüssigen Bestandteile müssen während oder nach dem Einmischvorgang aus der erhaltenen Schmelze entfernt werden. Dies erfolgt zweckmäßigerweise durch Verdampfen der flüssigen Bestandteile.

Dabei werden Entgasungsvorrichtungen, die am Extruder in Förderrichtung nach der Mischzone angebracht sind, verwendet. Es muß darauf geachtet werden, daß durch diese Öffnungen mit dem Dampf kein Feststoff mitgerissen wird. Dies kann beispielsweise durch den Einbau von Entgasungsstopfschnecken in die Extruderöffnungen geschehen, wodurch mitgerissenes Festprodukt in den Hauptextruder zurückbefördert wird. Die Entgasung kann mit Gegendruck, drucklos oder unter Vakuum erfolgen. Es ist zweckmäßig, mehrere Entgasungsstufen hintereinander vorzusehen, wobei in Förderrichtung des Hauptextruders der Gegendruck stufenweise abnehmen soll. Zusammen mit dem Wasser werden wasserdampfflüchtige Bestandteile entfernt.

Dadurch wird eine zusätzliche Reinigung des Polyphenylenethers und der Styrol enthaltenden Polymerisate von störenden Verunreinigungen, wie Restmonomeren, Oligomeren, Restlösungsmitteln und Katalysatorresten ermöglicht.

Durch das Verdampfen des Wassers wird infolge seiner hohen Verdampfungswärme der Schmelze Energie entzogen. Aus diesem Grund ist es möglich, durch Variation der Wasser-

menge im Polyphenylenether ein für das Mischen der Einsatzstoffe optimales Temperaturprofil über die Länge der Mischvorrichtung einzustellen: Je mehr Wasser die Feuchtgüter enthalten, desto mehr Energie muß für die Verdampfung aufgebracht werden, desto mehr Wärme wird also der Schmelze entzogen und desto niedriger liegt das Temperaturniveau der Schmelze.

Es ist nicht notwendig, die Mischvorrichtung zu beheizen, da durch die Scherwirkung der Mischelemente dem Mischgut genügend Energie zugeführt werden kann, um es auf dem gewünschten Temperaturniveau zu halten.

Anscheinend wird die Viskosität des Mischguts durch die Anwesenheit von Wasser so sehr herabgesetzt, daß für den Mischvorgang wesentlich weniger mechanische Energie erforderlich ist als bei wasserfreiem Arbeiten. Durch das verhältnismäßig niedrige Temperaturniveau einerseits und die geringen Scherkräfte für das Mischen andererseits werden die Styrol enthaltenden Polymerisate und der Polyphenylenether wesentlich weniger stark thermisch und mechanisch beansprucht als dies beim herkömmlichen Mischen von Thermoplasten der Fall ist. Außerdem ist die Temperaturregulierung bei diesem Verfahren viel einfacher.

Das erfindungsgemäße Verfahren ermöglicht also ein technisch einfach durchzuführendes Mischen von feuchten Polyphenylenethern mit Styrol enthaltenden Polymerisaten. Dabei erfolgt eine relativ geringe thermische und mechanische Beanspruchung der zu vermischenden Stoffe, was sich bei den schlagzäh modifizierten Styrol enthaltenden Polymerisaten in einer verbesserten Zähigkeit ausdrückt. Dennoch wird dabei eine homogene Verteilung der Komponenten erzielt. Außerdem werden störende niedermolekulare Anteile aus dem Gemisch entfernt, das zur Verbesserung der organoleptischen Eigenschaften führt. Das Verfahren hat zudem den Vorteil, daß kein zusätzlicher Aufschmelzvorgang zur Herstellung von Mischungen aus Polyphenylenethern und Styrol enthaltenden Polymerisaten notwendig ist.

Aus den nach dem erfindungsgemäßen Verfahren erhaltenen Mischungen werden mittels einer Spritzgußmaschine bei 280°C Prüfkörper hergestellt.

Beispiele und Vergleichsversuche

Als Styrol enthaltendes Polymerisat wurde ein schlagfest modifiziertes Polystyrol mit einer mittleren Teilchengröße der Weichkomponentenphase von 1 μm eingesetzt.

Der Poly-(2,6-dimethyl-1,4-phenylen)ether wurde analog dem Beispiel 1 der US-PS 3 661 848 in Toluol in Gegenwart von Cu-II-Br, Dibutylamin und Sauerstoff hergestellt. Er besaß eine Grenzviskosität gemessen bei 30°C in Chloroform von 0,48 [dl/g].

Beispiele 1 bis 3

Der oben beschriebene Polyphenylenether wird nach der Beendigung der Reaktion mit Methanol aus der Reaktionslösung ausgefällt, nach dem mechanischen Abtrennen der flüssigen Phase wird zweimal mit Methanol und anschließend zweimal mit destilliertem Wasser gewaschen. Das so erhaltene Polymerisat enthielt noch 37 Gew.-% an flüssigen Bestandteilen.

Dieses noch feuchte Poly(2,6-dimethyl-1,4-phenylen)ether-polymerisat wird dann mit der in der Tabelle angegebenen Menge an Schmelze des schlagfest modifizierten Polystyrols auf einem Doppelschneckenextruder, wie er in der

0058939

DE-AS 20 37 784 beschrieben ist, vermischt. Dazu wird das feuchte Polyphenylenetherpolymerisat bei Raumtemperatur gleichmäßig durch eine Öffnung am Beginn des Extruders zugegeben. Durch eine sich anschließende Öffung wird die in der Tabelle angegebene Menge an Schmelze des schlagfest modifizierten Polystyrols zudosiert. Hinter dieser Öffnung befindet sich im Extruder die Homogenisierstrecke in Form von intensiv mischenden Knetelementen. Die Mischtemperatur liegt in diesem Bereich bei 230 bis 280°C.

Durch 3 sich anschließende Entgasungsvorrichtungen werden die flüssigen Bestandteile entfernt, wobei sich die Massetemperaturen im Bereich von 240 bis 280°C bewegen. Das Endprodukt wird am Düsenkopf bei Temperaturen von 230 bis 270°C ausgetragen und durch eine Abschlagvorrichtung granuliert.

Vergleichsversuche A bis C

Die in der Tabelle angegebenen Gewichtsteile an schlagfest modifiziertem Polystyrol und an Poly-(2,6-dimethyl-1,4-phenylen)-ether, der nach dem Aufarbeiten aus der Lösung durch Fällen, Waschen und Filtrieren bei 60°C 24 Stunden bei 1 Torr Vakuum getrocknet worden war, wurden auf einem 2-Wellenextruder bei 280°C geschmolzen, homogenisiert, gemischt und granuliert.

Der Erweichungspunkt nach Vicat wurde nach DIN 53 460/B und die Kerbschlagzähigkeit nach DIN 53 453 bestimmt.

Zur Beurteilung des organoleptischen Verhaltens werden in allen Fällen unmittelbar am Granulator jeweils 10 Flaschen mit einem Volumen mit 100 ml mit jeweils 50 g Granulat gefüllt und dann luftdicht verschlossen. Nach 24 Stunden werden die Flaschen geöffnet und von 10 Test-

00\58939

personen bei 23°C auf das organoleptische Verhalten geprüft. Die in der Tabelle angegebenen Noten stellen den Mittelwert aus diesen Beurteilungen dar, wobei die Note 1 vollkommen geruchlos, die Note 6 starker Geruch bedeutet.

Tabelle

| Beispiele (erfindungsgemäß) | Schlagfest-modifiziertes Polystyrol [Gew.-Tle] | Poly-(2,6-dimethyl-1,4-phenylen)ether [Gew.-Tle] | Kerbschlagzähigkeit bei 23°C [kJ/m$^2$] | Erweichungspunkt nach Vicat [°C] | Organoleptische Beurteilung Benotung |
|---|---|---|---|---|---|
| 1 | 75 | 25 | 10 | 114,6 | 1 |
| 2 | 65 | 35 | 9 | 126,9 | 2 |
| 3 | 35 | 45 | 10 | 137,8 | 2 |
| Vergleichsversuche (nicht erfindungsgemäß) | | | | | |
| A | 75 | 25 | 5 | 113,5 | 4 |
| B | 65 | 35 | 8 | 124,8 | 5 |
| C | 35 | 45 | 9 | 135,4 | 5 |

**Patentanspruch**

Verfahren zum Herstellen thermoplastischer Formmassen, die

(A) 100 Gewichtsteile eines thermoplastischen Styrolpolymerisats sowie

(B) 5 bis 950 Gewichtsteile eines Polyphenylenethers enthalten,

durch Schmelzen der Komponenten (A) und (B) und Erzeugen einer homogenen Masse aus den Komponenten bei Temperaturen oberhalb der Erweichungstemperatur des Polyphenylenethers (B), dadurch gekennzeichnet, daß zum Erzeugen der homogenen Masse beim Schmelzen ein feuchter Polyphenylenether (B) eingesetzt wird, wobei der Feuchtigkeitsgehalt 2 bis 70 Gewichtsprozent, bezogen auf das Trockengewicht des Polyphenylenethers (B), beträgt, und die befeuchtende Flüssigkeit zu mindestens 50 Gewichtsprozent aus Wasser sowie − im gegebenen Fall − in der Restmenge aus organischer, der Gewinnung des Polyphenylenethers (B) entstammenden Flüssigkeit besteht.

Europäisches
Patentamt

**EUROPÄISCHER RECHERCHENBERICHT**

**0058939**
Nummer der Anmeldung

EP 82 10 1207

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | PATENTS ABSTRACTS OF JAPAN, Band 2, Nr. 41, 17. März 1978, Seite 4789C77 <br> & JP - A - 52 145 499 (ASAHI-DOW) 12-03-1977 * Zusammenfassung * | 1 | C 08 L 71/04 <br> C 08 L 25/00 |
| A | FR-A-2 099 398 (BASF) <br> * Ansprüche * | 1 | |
| E | EP-A-0 048 154 (ASAHI DOW) <br> * Ansprüche; Seite 6, Absatz 2 * | 1 | |

--- 

| | | | RECHERCHIERTE SACHGEBIETE (Int. Cl. 3) |
|---|---|---|---|
| | | | C 08 L <br> C 08 G |

Der vorliegende Recherchenbericht wurde für alle Patentansprüche erstellt.

| Recherchenort | Abschlußdatum der Recherche | Prüfer |
|---|---|---|
| DEN HAAG | 15-06-1982 | DERAEDT G. |